# EUROPÄISCHE PATENTANMELDUNG

(11) **EP 0 612 795 A1**
(43) Veröffentlichungstag der Anmeldung: **31.08.1994**
(21) Anmeldenummer: 94102723.7
(22) Anmeldetag: 23.02.1994
(51) Int. Cl.: C08K 5/00, C08L 23/08

(54) **Lichtstabilisierte Polymerzusammensetzungen**

(30) Priorität: 24.02.1993 DE 4305621
(71) Anmelder: CONSTAB POLYMER-CHEMIE GmbH & Co., D-59602 Rüthen (DE)
(72) Erfinder: Schultheis, Karl, J.Chem.-Ing., D-59581 Warstein (DE); Bar, Rami, IL-30053 (IL); Voigt, Ronald, Dr.Dipl.-Chem., D-59602 Rüthen (DE)
(74) Vertreter: Fritz, Edmund Lothar, Dipl.-Chem.

(57) **Zusammenfassung**

Die vorliegende Erfindung betrifft lichtstabilisierte Polymerzusammensetzungen auf Basis von Low-density-Polyethylen oder einem Ethylen-Vinylacetat-Copolymeren, die als Stabilisator wenigstens ein polymeres sterisch gehindertes Amin und eine Verbindung der Benzotriazolklasse enthalten. Die Zusammensetzungen eignen sich vorzugsweise zur Herstellung von Folien, die in der Landwirtschaft zum Einsatz kommen und deren Beständigkeit gegen Schwefel bzw. Fungizide und Lichteinwirkung verbessert wird.

## Beschreibung

Die vorliegende Erfindung betrifft lichtstabilisierte Polymerzusammensetzungen, insbesondere für die Herstellung von Folien für den Einsatz in der Landwirtschaft.

Synthetische Polymere, insbesondere auch Polyolefine, sind dafür bekannt, daß sich ihre optischen und mechanischen Eigenschaften unter der Einwirkung von Wärme, Licht oder anderer Umweltfaktoren verschlechtern. Zur Verbesserung der Beständigkeit werden den Polymeren daher Stabilisatoren zugesetzt, die diese Abbauerscheinungen vermindern sollen. Über eine Grundstabilisierung mit Hilfe von Antioxidantien hinaus ist es üblich, den Polymeren zur Gewährleistung einer längeren Gebrauchsdauer, insbesondere bei der Außenanwendung, Lichtstabilisatoren zuzusetzen. In der Patentliteratur ist eine Vielzahl von Verbindungen beschrieben, die sich zum Einsatz als Lichtstabilisatoren eignet, so z.B. Lichtschutzmittel der Reihe der Benzophenone, Benzotriazole, Oxalanilide, z.B. 2-Hydroxybenzophenone, 2-(2'-Hydroxyphenyl)-benzotriazole, Oxalsäurediamide und sterisch gehinderte Amine.

Für die Herstellung lichtstabilisierter Folien für den Einsatz in der Landwirtschaft haben sich in der Praxis vor allem sterisch gehinderte Amine und organische Nickelverbindungen als Lichtstabilisatoren durchgesetzt. Ein erheblicher Nachteil dieser Verbindungen besteht jedoch in ihrer geringen Stabilität gegen die Einwirkung von Schwefel, Pestiziden und Herbiziden. In der Landwirtschaft wird häufig das Schwefeln von Kulturen (z.B. Rosenkulturen) wegen der fungiziden Wirkung angewandt. Die aggressive Wirkung der dabei entstehenden schwefligen Säure führt zu einer erheblichen Verkürzung der Lebensdauer der Folien.

Die Aufgabe der vorliegenden Erfindung besteht darin, lichtstabilisierte Polymerzusammensetzungen insbesondere für die Herstellung von Folien für die Landwirtschaft zu schaffen, die eine erhöhte Stabilität gegen Schwefel, Pestizide und Herbizide aufweisen.

Es wurde nun überraschend gefunden, daß Polymerzusammensetzungen auf Basis von Low-density-Polyethylen oder Ethylen-Vinylacetat-Copolymeren, die sowohl ein polymeres sterisch gehindertes Amin als auch eine Verbindung der Benzotriazolklasse, insbesondere ein 2-Hydroxyphenylbenzotriazol enthalten, sich zur Herstellung von Filmen, Platten, Geweben und Gewirken mit der gewünschten Stabilität gegen Schwefel, Pestizide und Herbizide eignen. Gegenstand der Erfindung sind vorzugsweise solche Polymerzusammensetzungen auf Basis von Low-density-Polyethylen bzw. Ethylen-Vinylacetat-Copolymeren, die neben einem oder mehreren Lichtschutzmitteln aus den sterisch gehinderten Aminen wenigstens ein gegebenenfalls substituiertes 2-(2'-Hydroxyphenyl)-benzotriazol enthalten, vorzugsweise eine Verbindung, die unter dem Handelsnamen Tinuvin 350 bekannt ist. Als polymeres sterisch gehindertes Amin kommen insbesondere die Handelsprodukte Chimassorb 944 (?), Hostavin N 30, Uvasil 299 [Polymethylpropyl 3-oxy (4(2,2,6,6-tetramethyl) piperidinyl) siloxan] oder ähnliche in Betracht.

Den erfindungsgemäßen lichtstabilisierten und gegen Schwefel, Pestizide und Herbizide stabilisierten Polymerzusammensetzungen werden das Benzotriazolderivat und das sterisch gehinderte Amin im allgemeinen in einer Menge von 0,01 bis 5 Gewichts-Prozent, vorzugsweise in Mengen von 0,1 bis 2,5 Gewichts-Prozent zugesetzt. Der Zusatz der beiden erfindungsgemäßen Additive zu den Polymeren kann nach üblichen Methoden in jedem beliebigen Stadium der Herstellung bzw. Verarbeitung erfolgen, vorzugsweise erfolgt der Zusatz erfindungsgemäß im Stadium der Folienblasextrusion.

Die aus den erfindungsgemäßen Polymerzusammensetzungen herzustellenden Folien können weitere Additive enthalten, z.B. Lichtdiffusoren oder Pigmente. Außerdem werden die so hergestellten Folien häufig Mittel gegen Oxidation und Antitaumittel enthalten.

Die erfindungsgemäßen Zusammensetzungen eignen sich insbesondere für die Herstellung von Folien auf Polyethylen- bzw. Ethylen-Vinylacetatbasis, die ein- oder mehrschichtig sein können mit einer Dicke von 30 bis 500 micrometer und einer Breite von bis zu 16 m.

Nachfolgend wird die vorliegende Erfindung anhand von Ausführungsbeispielen näher beschrieben.

### Mischung A (Vergleichsmischung)

84 kg low-density-Polyethylen,
0,7 kg tris-(2,4-di-tert.butylphenyl)-phosphit,
0,3 kg Benzolpropan-Säure-3,5-bis-(1,1-dimethylethyl)-4-hydroxy-, 2,2-bis((3-(3,5-bis(1,1-dimethylethyl)-4-hydroxyphenyl)-1-oxopropoxy) methyl)-1,3-propandiylester,
5 kg 2-Hydroxy-4-n-octoxy benzophenon und
10 kg Polymethylpropyl-3-oxy-(4(2,2,6,6 tetramethyl) piperidinyl)-Siloxan
werden in einem Banburry-Mixer bis zur Homogenisierung gemischt und in einem Doppelschneckenextruder bei 180°C. extrudiert.

### Mischung B

84 kg low-density-Polyethylen,
0,7 kg tris-(2,4-di-tert.butylphenyl)-phosphit,
0,3 kg Benzolpropan-Säure-3,5-bis-(1,1-dimethylethyl)-4-hydroxy-, 2,2-bis((3-(3,5-bis(1,1-dimethylethyl)-4-hydroxyphenyl)-1-oxopropoxy) methyl)-1,3-propandiylester,
5 kg 2-(2'Hydroxy-3'-tert.butyl-5'-methylphenyl)-5-chlorbenzotriazol
10 kg Polymethylpropyl-3-oxy-(4(2,2,6,6 tetramethyl) piperidinyl)-Siloxan
werden in einem Banburry-Mixer bis zur Homogenisierung gemischt und in einem Doppelschneckenextruder bei 180°C. extrudiert.

### Beispiel 1 (Vergleichsbeispiel)

86 kg low density-Polyethylen,
10 kg Ethylen-Vinylacetat-Copolymer mit einem 15 %-igen Vinylacetatanteil und
4 kg Granulat der Mischung A
wurden im Extrusionsblasverfahren zu einem 100 µm starken Schlauch vom 10 m Umfang extrudiert, der danach aufgeschlitzt wurde, um eine Folie von 10 m Breite zu erhalten.

### Beispiel 2

86 kg low density-Polyethylen,
10 kg Ethylen-Vinylacetat-Copolymer mit einem 15 %-igen Vinylacetatanteil und
4 kg Granulat der Mischung B
wurden im Extrusionsblasverfahren zu einem 100 µm starken Schlauch vom 10 m Umfang extrudiert, der danach aufgeschlitzt wurde, um eine Folie von 10 m Breite zu erhalten.

### Beispiel 3 (Vergleichsbeispiel)

82 kg low density-Polyethylen,
10 kg Ethylen-Vinylacetat-Copolymer mit einem 15 %-igen Vinylacetatanteil und
8 kg Granulat der Mischung A
wurden im Extrusionsblasverfahren zu einem 100 µm starken Schlauch vom 10 m Umfang extrudiert, der danach aufgeschlitzt wurde, um eine Folie von 10 m Breite zu erhalten.

### Beispiel 4

82 kg low density-Polyethylen,
10 kg Ethylen-Vinylacetat-Copolymer mit einem 15 %-igen Vinylacetatanteil und
8 kg Granulat der Mischung B
wurden im Extrusionsblasverfahren zu einem 100 µm starken Schlauch vom 10 m Umfang extrudiert, der danach aufgeschlitzt wurde, um eine Folie von 10 m Breite zu erhalten.

Die gemäß Beispiel 1 bis 4 hergestellten Folien wurden in Streifen von 65 x 100 mm geschnitten und unter der 45° geneigten Dachfläche eines Versuchsgewächshauses angebracht. Das Gewächshaus enthielt 2 Schwefelsublimatoren und einen Wasserverdampfer am Boden, sowie einen Ventilator in seitlich horizontaler Lage.

Die Folien wurden einer 48-ig-stündigen Einwirkung von Schwefel ausgesetzt. Der Versuch wurde um 8.00 Uhr begonnen, von 18.00 bis 6.00 Uhr erfolgte neben der Schwefeleinwirkung eine Wasserverdampfung. Der Versuch wurde nach 48 Std. beendet.

Danach wurden die den Glasseiten des Gewächshauses zugewandten Folienseiten einer UV-Belichtung gem. DIN. 53 387 (Verfahren A) unterzogen.

Die Belichtungsdauer betrug 100 und 200 Stunden. Gemessen wurde der Carbonylindex der Folien mittels FTIR-Spektroskopie. Der Carbonylindex dient als Maß für den Abbau des Polyethylen und gibt somit ein Kriterium für die Veränderung der Eigenschaften der zu prüfenden Folie aufgrund von Alterung unter den genannten Bedingungen. Es wird auf die Beschreibung des Verfahrens in der DIN. 53 387 verwiesen.

### Ergebnisse:

| Folienaufbau gemäß Beispiel | Carbonylindex nach 100 h | nach 200 h |
|---|---|---|
| 1 | 0.1317 | 0.2046 |
| 2 | 0.0383 | 0.1006 |
| 3 | 0.0963 | 0.1987 |
| 4 | 0.0357 | 0.0983 |

Die erfindungsgemäß hergestellten Folien (Beispiele 2 und 4) nach 100 h und nach 200 h einen überraschend niedrigen Carbonylindex. Es handelt sich folglich um Folien mit wesentlich besserer Beständigkeit gegen Schwefel und Lichteinwirkung als die gemäß den Vergleichsbeispielen 1 und 3 hergestellten Folien.

## Patentansprüche

1. Lichtstabilisierte Polymerzusammensetzung auf Basis von Low-density-Polyethylen oder einem Ethylen-Vinylacetat-Copolymeren, enthaltend als Stabilisator wenigstens ein polymeres sterisch gehindertes Amin und eine Verbindung der Benzotriazolklasse.

2. Polymerzusammensetzung nach Anspruch 1, dadurch gekennzeichnet, daß sie ein gegebenenfalls substituiertes 2-Hydroxyphenylbenzotriazol enthält.

3. Polymerzusammensetzung nach Anspruch 1 oder 2, dadurch gekennzeichnet, daß sie als polymeres sterisch gehindertes Amin Chimassorb 944 und/oder Hostavin N 30 und/oder Uvasil 299 enthält.

4. Polymerzusammensetzung nach einem der Ansprüche 1 bis 3, dadurch gekennzeichnet, daß sie das Benzotriazolderivat und das sterisch gehinderte Amin jeweils in einer Menge von 0,01 bis 5 Gewichts-Prozent, vorzugsweise jeweils in einer Menge von 0,1 bis 2,5 Gewichts-Prozent enthält.

5. Ein- oder mehrschichtige Folie für den Einsatz in der Landwirtschaft, dadurch gekennzeichnet, daß diese durch Blasextrusion aus einer Polymerzusammensetzung gemäß einem der Ansprüche 1 bis 4 hergestellt wurde.

6. Ein- oder mehrschichtige Folie für den Einsatz in der Landwirtschaft nach Anspruch 5, dadurch gekennzeichnet, daß diese eine Dicke im Bereich von 30 bis 500 micrometer aufweist.
